# EUROPÄISCHE PATENTSCHRIFT

(11) **EP 3 640 676 B1**
(45) Veröffentlichungstag und Bekanntmachung des Hinweises auf die Patenterteilung: **25.06.2025**
(21) Anmeldenummer: 19198848.4
(22) Anmeldetag: 23.09.2019
(51) Int. Cl.: G01S 13/931, G01S 15/931, G01S 13/86, B60R 1/02

(54) **VERFAHREN ZUM ÜBERWACHEN EINER UMGEBUNG EINES GESPANNS AUS EINEM ZUGFAHRZEUG UND EINEM VON DEM ZUGFAHRZEUG GEZOGENEN ANHÄNGER SOWIE STEUERVORRICHTUNG FÜR DAS ZUGFAHRZEUG UND ZUGFAHRZEUG MIT DER STEUERVORRICHTUNG**
METHOD FOR MONITORING AN ENVIRONMENT OF A SET COMPRISING A TRACTION VEHICLE AND A TRAILER PULLED BY THE TRACTION VEHICLE AND CONTROL DEVICE FOR THE TRACTION VEHICLE AND TRACTION VEHICLE COMPRISING SAID CONTROL DEVICE
PROCÉDÉ DE SURVEILLANCE D'UN ENVIRONNEMENT D'UN ATTELAGE D'UN VÉHICULE TRACTEUR ET D'UNE REMORQUE TRACTÉE PAR LE VÉHICULE TRACTEUR AINSI QU'APPAREIL DE COMMANDE POUR LE VÉHICULE TRACTEUR ET VÉHICULE TRACTEUR DOTÉ DE L'APPAREIL DE COMMANDE

(30) Priorität: 15.10.2018 DE 102018217639
(43) Veröffentlichungstag der Anmeldung: 22.04.2020
(73) Patentinhaber: Continental Automotive Technologies GmbH, 30175 Hannover (DE)
(72) Erfinder: Hutomo, Leonardus Ibnu, 78050 Villingen-Schwenningen (DE)
(74) Vertreter: Continental Corporation

(56) Entgegenhaltungen:
- DE-A1- 10 351 655
- DE-A1- 102016 015 363
- DE-A1- 102016 209 927
- DE-A1- 102017 205 114

## Beschreibung

Die Erfindung betrifft ein Verfahren zum Überwachen einer Umgebung eines Gespanns. Ein solches Gespann setzt sich aus einem Zugfahrzeug und zumindest einem Anhänger zusammen, wobei der zumindest eine Anhänger von dem Zugfahrzeug gezogen wird. Ein Beispiel für ein solches Gespann ist ein Sattelzug, bei welchem das Zugfahrzeug durch eine sogenannte Zugmaschine und der Anhänger durch einen sogenannten Sattelauflieger gebildet sind. Bei einem Gespann kann der Anhänger in Bezug auf das Zugfahrzeug gedreht oder geknickt werden, sodass sich bei einer Kurvenfahrt ein Knickwinkel zwischen dem Zugfahrzeug und dem Anhänger bildet, was die Überwachung der Umgebung des Gespanns mittels einer Sensoreinrichtung schwierig gestalten kann. Zu der Erfindung gehören auch eine Steuervorrichtung für ein Zugfahrzeug eines Gespanns sowie ein Zugfahrzeug mit der Steuervorrichtung.

Die Überwachung der seitlichen Umgebung eines Gespanns ist beispielsweise aus der WO 2011/090417 A1 bekannt. Darin ist beschrieben, dass seitlich an dem Zugfahrzeug eine Sensoreinrichtung mit einem Radar angeordnet sein kann. Der Erfassungsbereich oder das Sichtfeld / "Field of View" (FOV) des Radarsensors ist in einen Seitenbereich der Umgebung ausgerichtet, der sich neben dem Gespann erstreckt. Fährt neben dem Gespann ein anderes Kraftfahrzeug, so kann dieses mittels der Sensoreinrichtung erkannt und der Fahrer des Gespanns auf dieses Kraftfahrzeug neben ihm aufmerksam gemacht werden, damit nicht beispielsweise durch einen Fahrspurwechsel das andere Kraftfahrzeug von der Straße gedrängt wird. Bei dem System aus dem Stand der Technik müssen Metallbleche verwendet werden, damit der Radarsensor nicht zu weit nach hinten abstrahlt. Ansonsten kann es zu einer unerwünschten Ortung eines weit entfernt hinter dem Gespann fahrenden Kraftfahrzeugs kommen. Gemäß dem Stand der Technik ist die Ausrichtung der Metallbleche aber nur für eine Geradeausfahrt angepasst.

Die Festlegung der Grenzen des Erfassungsbereichs orientiert sich also an der Geradeausfahrt des Gespanns. Durch eine Kurvenfahrt entsteht aber der besagte Knickwinkel zwischen Zugfahrzeug und Anhänger, wodurch der Bedarf an einer anderen Ausrichtung des Erfassungsbereichs entstehen kann.

Die DE 103 51 655 A1 beschreibt ein Verfahren zur Anzeige eines Fahrwegs einer von einem ziehenden Fahrzeugteil eines Fahrzeugs nachgeschleppten Achse eines nachgeschleppten Fahrzeugteils bei einer Kurvenfahrt des Fahrzeugs. Es ist vorgesehen, einen Blickwinkel einer Bilderfassungseinrichtung nachzuführen und ein erfasstes Bild einem Fahrer anzuzeigen. Die Position und/oder die Schleppkurve der nachgeschleppten Achse wird ermittelt, daraus die notwendige Nachführung des Blickwinkels der Bilderfassungseinrichtung zur Erfassung des Fahrwegs der nachgeschleppten Achse ermittelt und der Blickwinkel entsprechend nachgeführt. Somit wird der Fahrweg der nachgeführten Achse stets erfasst.

Die DE 10 2016 015 363 A1 beschreibt ein Verfahren zum Überwachen einer Fahrzeugumgebung eines Fahrzeug-Gespanns. In dem Verfahren wird eine, eine Ausrichtung zwischen einem Zugfahrzeug und einem Anhänger charakterisierende Größe ermittelt und- in Abhängigkeit davon eine Stellgröße bestimmt wird, mit dem ein Überwachungsraum innerhalb eines Erfassungsbereiches einer Kamera eines Überwachungssystems verschoben und damit dynamisch angepasst wird.

Die DE 10 2017 205 114 A1 betrifft ein knickgelenktes Fahrzeug, das in einem vorderen Bereich einen Sensor aufweist, welcher in Abhängigkeit des Knickwinkels des Knickgelenkes verschwenkbar ist, um einen detektierten Bereich anzupassen.

Es ist vorgesehen, dass bei einer Fahrgeschwindigkeit größer Null Sensoren so verschwenkbar sind, dass ein Überlappungsbereich entsteht, bei welchem sich die sensierten Bereiche der Sensoren überlappen.

Die DE 10 2016 209 927 A1 beschreibt eine Überwachungsvorrichtung für ein Umfeld eines Fahrzeugs, insbesondere für ein Spiegelersatzsystem, mit einem ersten Tragelement, das lagefest mit dem Fahrzeug verbindbar ist, einem zweiten Tragelement, einem ersten Schwenkmechanismus, der das erste und zweite Trageelement miteinander verbindet, und einer Sensoreinheit die eine optische Achse aufweist offenbart.

Der Erfindung liegt die Aufgabe zugrunde, für eine Überwachung eines Seitenbereichs eines Gespanns den Erfassungsbereich der verwendeten Sensoreinrichtung an eine Fahrsituation, bei welcher der Knickwinkel zwischen Zugfahrzeug und Anhänger verändert ist, anzupassen.

Die Aufgabe wird durch die Gegenstände der unabhängigen Patentansprüche gelöst. Vorteilhafte Ausführungsformen der Erfindung ergeben sich durch die abhängigen Ansprüche, die folgende Beschreibung sowie die Figuren.

Durch die Erfindung ist ein Verfahren zum Überwachen einer Umgebung eines Gespanns bereitgestellt. Das Gespann setzt sich aus einem Zugfahrzeug und zumindest einem von dem Zugfahrzeug gezogenen Anhänger zusammen. Mehrere Anhänger können in einer Reihe gezogen werden. An dem Zugfahrzeug ist eine Sensoreinrichtung bereitgestellt, die dazu eingerichtet ist, die Umgebung des Gespanns in einem Seitenbereich zu erfassen, der sich neben dem Gespann erstreckt. Durch die Sensoreinrichtung kann also beispielsweise ein rechter Seitenbereich oder ein linker Seitenbereich des Gespanns erfasst oder überwacht werden. Natürlich kann für sowohl den rechten Seitenbereich als auch den linken Seitenbereich jeweils eine Sensoreinrichtung bereitgestellt sein. Das Verfahren bezieht sich hierbei jeweils auf den Betrieb einer Sensoreinrichtung für einen Seitenbereich.

Die Sensoreinrichtung ist an einem Fahrzeugteil des Zugfahrzeugs mittels einer Haltevorrichtung gehalten. Beispielsweise kann die Sensoreinrichtung an einem Rahmen oder einem Verkleidungsteil des Zugfahrzeugs mittels der Haltevorrichtung befestigt oder gehalten sein. Mittels der Haltevorrichtung ist die Sensoreinrichtung dabei in der Weise ausgerichtet, dass in der besagten Weise der Erfassungsbereich (FOV - Field of View) der Sensoreinrichtung in den Seitenbereich ausgerichtet ist. Mittels der Sensoreinrichtung kann somit in der an sich bekannten Weise ein anderer Verkehrsteilnehmer, beispielsweise ein Kraftfahrzeug oder Fahrradfahrer oder Fußgänger, in dem Seitenbereich erfasst oder detektiert werden. Entsprechend kann ein Fahrer des Zugfahrzeugs auf die Gegenwart des anderen Verkehrsteilnehmers hingewiesen werden.

Um nun aber die sich verändernde relative Lage des Anhängers bezüglich des Zugfahrzeugs beispielsweise während einer Kurvenfahrt des Gespanns zu berücksichtigen (Veränderung des Knickwinkels zwischen Zugfahrzeug und Anhänger), ist bei dem erfindungsgemäßen Verfahren vorgesehen, dass die Sensoreinrichtung mittels der Haltevorrichtung bezüglich des besagten Fahrzeugteils verschwenkbar gelagert ist. Mit anderen Worten kann die Sensoreinrichtung mittels der Haltevorrichtung bezüglich des Fahrzeugteils beispielsweise horizontal und/oder vertikal verschwenkt oder verdreht oder bewegt werden. Die Sensoreinrichtung kann bezüglich des Fahrzeugteils also mechanisch verstellt werden. Entsprechend wird dann auch der Erfassungsbereich der Sensoreinrichtung im Seitenbereich dynamisch ausgerichtet oder verlagert. Eine Steuervorrichtung ist dazu eingerichtet, zumindest ein Betriebssignal des Gespanns zu empfangen. Ein Betriebssignal ist ein Signal, welches einen aktuellen Betriebszustand des Gespanns beschreibt. Ein Betriebssignal kann beispielsweise aus einem Datenbus oder Kommunikationsbus der Zugmaschine, beispielsweise einem CAN-Bus (CAN - Controller Area Network), empfangen oder ausgelesen werden. Die Steuervorrichtung ist des Weiteren dazu eingerichtet, in Abhängigkeit von dem zumindest einen empfangenen Betriebssignal einen aktuellen Knickwinkel zwischen dem Zugfahrzeug und dem Anhänger zu ermitteln. Mit anderen Worten wird aus dem zumindest einen Betriebssignal eine Schätzung oder Messung des aktuellen Knickwinkels ermittelt oder abgeleitet. Falls beispielsweise ein Sensor zum Messen des Knickwinkels in dem Gespann bereitgestellt ist, kann als Betriebssignal das Sensorsignal dieses Sensors empfangen werden. In diesem Fall würde der aktuelle Knickwinkel als gemessener Winkelwert verfügbar sein. Die Steuervorrichtung ist des Weiteren dazu eingerichtet, eine mechanische Schwenkposition der Sensoreinrichtung bezüglich des Fahrzeugteils, an welchem sie gehalten sein kann, durch Ansteuern der Haltevorrichtung einzustellen, um eine Ausrichtung des Erfassungsbereichs der Sensoreinrichtung an den Knickwinkel anzupassen. Mit anderen Worten verändert sich also die Schwenkposition oder räumliche Ausrichtung der Sensoreinrichtung bezüglich des Fahrzeugteils, wenn sich der Knickwinkel zwischen Zugfahrzeug und Anhänger verändert. Hierzu wird die verschwenkbar ausgestaltete Haltevorrichtung verwendet und bei dieser durch die Steuervorrichtung beispielsweise eine Aktuatoreinrichtung oder Antriebseinrichtung angesteuert.

Durch die Erfindung ergibt sich der Vorteil, dass eine laterale Ausrichtung des Erfassungsbereichs der Sensoreinrichtung in den Seitenbereich hinein an den Knickwinkel des Gespanns angepasst werden kann. Hierdurch kann vermieden werden, dass beispielsweise in einer Kurvenfahrt der Erfassungsbereich der Sensoreinrichtung eine für die Überwachung des Seitenbereichs ungünstigen oder unerwünschten Ausrichtung aufweist.

Die Sensoreinrichtung weist zumindest zwei Sensoren auf. Deren jeweilige Sensorerfassungsbereiche sind dann bei einer Geradeausfahrt des Gespanns bevorzugt paarweise zumindest teilweise überlagert sind. Die Summe der Sensorerfassungsbereiche ergibt den besagten Erfassungsbereich der Sensoreinrichtung insgesamt. Das beschriebene Anpassen der mechanischen Schwenkposition der Sensoreinrichtung kann dabei auch bedeuten, dass lediglich ein Sensor oder lediglich einige Sensoren der Sensoreinrichtung mechanisch verschwenkt oder verstellt oder neu ausgerichtet werden.

Die Sensoreinrichtung weist die zumindest zwei Sensoren auf, deren Erfassungsbereiche zumindest teilweise überlagert sind. Die Sensorerfassungsbereiche weisen die Überlagerung auf. Die Sensorerfassungsbereiche ergeben gemeinsam den Erfassungsbereich der Sensoreinrichtung insgesamt.

Durch die Überlagerung ergibt sich eine Abdeckungsreserve. Mit anderen Worten kann einer der Sensoren verschwenkt werden, ohne dass sich zwischen den Sensorerfassungsbereichen zweier Sensoren eine Erfassungslücke oder ein nicht-erfasster Bereich ergibt.

Die Haltevorrichtung ist dazu eingerichtet, zumindest einen Sensor der Sensoreinrichtung an einem Fahrzeugteil des Zugfahrzeugs zu halten. Um hierbei eine Anpassung der Ausrichtung des Erfassungsbereichs der Sensoreinrichtung an einen Knickwinkel des Gespanns aus Zugfahrzeug und einem Anhänger zu ermöglichen, ist erfindungsgemäß vorgesehen, dass die Haltevorrichtung dazu eingerichtet ist, zumindest einen von den zumindest zwei Sensoren relativ beweglich zu dem Fahrzeugteil zu halten und in Abhängigkeit von einem Steuersignal, das beispielsweise von der beschriebenen Steuervorrichtung erzeugt werden kann, eine Schwenkposition des zumindest einen Sensors bezüglich des Fahrzeugteils zu verändern. Mit anderen Worten kann durch Bereitstellen oder Erzeugen eines Steuersignals mittels der Haltevorrichtung zumindest ein Sensor der Sensoreinrichtung an dem Fahrzeugteil verschwenkt oder verdreht oder bewegt oder veränderlich ausgerichtet werden. Hiermit verändert sich eine Ausrichtung des Erfassungsbereichs der Sensoreinrichtung bezüglich des Fahrzeugteils.

Indem die Überlagerung der Sensorerfassungsbereiche vorgesehen ist, kann trotz der Verschwenkung eines der Sensoren sichergestellt sein, dass der Erfassungsbereich zwischen den beiden Sensorerfassungsbereichen lückenlos bleibt, das heißt die Überlagerung bleibt erhalten.

Gemäß der Erfindung wird durch das Ansteuern der Haltevorrichtung, durch welche die Sensoreinrichtung gehalten ist, bei Veränderung des Knickwinkels, wenn sich dieser also verändert, die Schwenkposition dahingehend nachgeführt, dass eine Erfassungslücke kleiner als ein vorbestimmter Lücken-Maximalwert bleibt. Die besagte Erfassungslücke ist derjenige Bereich, der sich zwischen einem Rand des Erfassungsbereichs und dem Anhänger ergibt. Wird beispielsweise mittels der Sensoreinrichtung ein rechter Seitenbereich des Gespanns überwacht und biegt das Gespann nach links ab, so vergrößert sich zunächst die Erfassungslücke zwischen dem Erfassungsbereich und dem Anhänger, wenn die Sensoreinrichtung unverschwenkt bleibt. Dem kann nun entgegengewirkt werden, indem die Schwenkposition nachgeführt wird, sodass der Erfassungsbereich zum Heck des Gespanns hin verschwenkt wird, wodurch die Erfassungslücke verkleinert wird und damit unter dem besagten Lücken-Maximalwert gehalten wird. Hierdurch kann in vorteilhafter Weise ein blinder Winkel beim Abbiegen des Gespanns vermieden werden.

Gemäß der Erfindung wird durch das Ansteuern der Haltevorrichtung bei einer Veränderung des Knickwinkels die Schwenkposition dahingehend nachgeführt, dass eine Überschneidung eines Erfassungswinkels oder Abstrahlwinkels des Erfassungsbereichs und dem Anhänger kleiner als ein vorbestimmter Überschneidungs-Maximalwert bleibt. Der Erfassungswinkels definiert den besagten Rand des Erfassungsbereichs für den Fall, dass kein Hindernis eine Abschirmung verursacht. Wird beispielsweise der rechte Seitenbereich mittels der Erfassungseinrichtung überwacht und führt das Gespann ein Abbiegemanöver nach rechts durch, so wird der Erfassungswinkels, das heißt der theoretische Rand des Erfassungsbereichs, auf den Anhänger zu bewegt und weist dann in den Anhänger hinein. Dies führt zu der besagten Überschneidung. Damit erfasst aber die Sensoreinrichtung den Anhänger selbst, was zu einer sogenannten Geister-Ortung führen kann. Mit anderen Worten kann dies verursachen, dass der Fahrer vor einem Verkehrsteilnehmer gewarnt wird, den es nicht gibt, da nur der Anhänger fälschlicherweise als fremder Verkehrsteilnehmer interpretiert wird. Durch Verändern der Schwenkposition kann nun der Erfassungsbereich zu einer Front des Gespanns hin verschwenkt und damit vom Anhänger weg geschwenkt werden. Dies vermeidet in vorteilhafter Weise die besagte Geister-Ortung.

Durch eine Bewegung oder Verschwenkung der Schwenkposition zumindest eines Sensors der Sensoreinrichtung kann die Ausrichtung von dessen jeweiligem Sensorerfassungsbereich relativ zum Gespann verändert werden. So kann beispielsweise der Rand des Sensorerfassungsbereichs eines Sensors bezüglich des Rands des Anhängers ausgerichtet werden. Hierdurch wird die Überschneidung auf einen Überschneidungs-Maximalwert begrenzt oder reduziert.

Die Überwachung des Seitenbereichs ist mittels einer Sensoreinrichtung vorgesehen, die zwei Radarsensoren umfasst.

Die Erfindung umfasst auch Ausführungsformen, durch die sich zusätzliche Vorteile ergeben.

In einer Ausführungsform umfasst das zumindest eine Betriebssignal einen Lenkwinkel einer Lenkung des Zugfahrzeugs. Mit anderen Worten ist durch das zumindest eine Betriebssignal signalisiert, in welche Richtung das Gespann gelenkt wird.

Hierdurch kann in vorteilhafter Weise ein Lenkmanöver des Gespanns erkannt werden. Der Lenkwinkel der Lenkung kann beispielsweise mittels eines Lenkwinkelsensors erfasst werden.

In einer Ausführungsform umfasst das zumindest eine Betriebssignal einen jeweiligen Einschlagwinkel zumindest eines Rades des Zugfahrzeugs und/oder des Anhängers. Ein Einschlagwinkel eines Rades kann mittels eines entsprechenden Sensors erfasst und/oder aus einer Servolenkung ausgelesen werden.

In einer Ausführungsform ist die besagte Steuervorrichtung dazu eingerichtet, auf der Grundlage des zumindest einen Betriebssignals, also beispielsweise auf der Grundlage eines Signals für den Lenkwinkel, mittels eines Modells einen zeitlichen Verlauf des Knickwinkels zu ermitteln. Mit anderen Worten wird mittels des Modells auch eine zeitliche Entwicklung oder Veränderung des Knickwinkels ermittelt oder hergeleitet, wie sie sich auch bei unveränderlichem Betriebssignal z.B. aufgrund einer Rollbewegung des Gespanns ergeben kann. Das Modell kann beispielsweise als digitales Modell und/oder beispielsweise auf Grundlage einer analogen Integratorschaltung realisiert sein. Als digitales Modell kann ein Programmmodul für eine Prozessoreinrichtung, beispielsweise einen Mikrocontroller oder einen Mikroprozessor, vorgesehen sein. Mittels des Modells kann in vorteilhafter Weise berücksichtigt werden, dass sich der Knickwinkel auch dann weiter verändert, wenn das Gespann weiterrollt, ohne dass ein Betriebsparameter des Gespanns, z.B. der Lenkwinkel, weiter verändert wird.

So ist in einer Ausführungsform vorgesehen, dass das zumindest eine Betriebssignal eine Fahrgeschwindigkeit des Gespanns umfasst und das Modell den zeitlichen Verlauf des Knickwinkels als Funktion der Fahrgeschwindigkeit ermittelt. Das Modell gibt also ein Zeitsignal aus, welches beschreibt, zu welchem Zeitpunkt der Knickwinkel welchen geschätzten oder berechneten Wert aufweist. Wird beispielsweise der Lenkwinkel des Zugfahrzeugs auf einen Wert ungleich 0 Grad eingestellt und rollt dann das Gespann mit einer bekannten Fahrgeschwindigkeit, so nimmt der Knickwinkel kontinuierlich zu, ohne dass der Lenkwinkel selbst hierbei weiter verändert werden muss. Dies kann nun durch das Modell berücksichtigt werden.

Die Sensoreinrichtung umfasst zwei Radarsensoren. Mit anderen Worten kann mittels der Sensoreinrichtung eine aktive Ortung durchgeführt werden, indem Radarstrahlen ausgesendet werden. Hierdurch ist die Überwachung des Seitenbereichs der Umgebung unabhängig von beispielsweise aktuellen Lichtverhältnissen.

Um das erfindungsgemäße Verfahren durchzuführen, ist durch die Erfindung auch ein System, umfassend eine Sensoreinrichtung eines Zugfahrzeugs und eine Haltevorrichtung für die Sensoreinrichtung eines Zugfahrzeugs bereitgestellt. Die Haltevorrichtung ist dazu eingerichtet, zumindest zwei Sensor der Sensoreinrichtung an einem Fahrzeugteil des Zugfahrzeugs zu halten. Um hierbei eine Anpassung der Ausrichtung des Erfassungsbereichs der Sensoreinrichtung an einen Knickwinkel des Gespanns aus Zugfahrzeug und einem Anhänger zu ermöglichen, ist erfindungsgemäß vorgesehen, dass die Haltevorrichtung dazu eingerichtet ist, zumindest einen von dem zumindest zwei Sensoren relativ beweglich zu dem Fahrzeugteil zu halten und in Abhängigkeit von einem Steuersignal, das beispielsweise von der beschriebenen Steuervorrichtung erzeugt werden kann, eine Schwenkposition des zumindest einen Sensors bezüglich des Fahrzeugteils zu verändern. Mit anderen Worten kann durch Bereitstellen oder Erzeugen eines Steuersignals mittels der Haltevorrichtung zumindest ein Sensor der Sensoreinrichtung an dem Fahrzeugteil verschwenkt oder verdreht oder bewegt oder veränderlich ausgerichtet werden. Hiermit verändert sich eine Ausrichtung des Erfassungsbereichs der Sensoreinrichtung bezüglich des Fahrzeugteils.

Die Sensoreinrichtung weist die zumindest zwei Sensoren auf, deren Erfassungsbereiche zumindest teilweise überlagert sind.

Die Sensorerfassungsbereiche weisen die Überlagerung auf. Die Sensorerfassungsbereiche ergeben gemeinsam den Erfassungsbereich der Sensoreinrichtung insgesamt.

Durch die Überlagerung ergibt sich eine Abdeckungsreserve. Mit anderen Worten kann einer der Sensoren verschwenkt werden, ohne dass sich zwischen den Sensorerfassungsbereichen zweier Sensoren eine Erfassungslücke oder ein nicht-erfasster Bereich ergibt.

Indem die Überlagerung der Sensorerfassungsbereiche vorgesehen ist, kann trotz der Verschwenkung eines der Sensoren sichergestellt sein, dass der Erfassungsbereich zwischen den beiden Sensorerfassungsbereichen lückenlos bleibt, das heißt die Überlagerung bleibt erhalten.

In einer Ausführungsform weist die Haltevorrichtung zum Verändern der Schwenkposition eine elektromechanische Antriebseinrichtung auf. Eine elektromechanische Antriebseinrichtung kann beispielsweise auf der Grundlage eines Elektromotors, beispielsweise eines Schrittmotors, realisiert sein. In einer Ausführungsform weist die Haltevorrichtung zum Verändern der Schwenkposition eine pneumatische und/oder hydraulische Antriebseinrichtung auf. Eine pneumatische und/oder hydraulische Antriebseinrichtung kann eine Pneumatik und/oder Hydraulik des Zugfahrzeugs nutzen, sodass keine eigene Kraftquelle notwendig ist.

In einer Ausführungsform weist die Haltevorrichtung zum Verändern der Schwenkposition eine mechanische Antriebseinrichtung auf. Eine mechanische Antriebseinrichtung kann beispielsweise vorsehen, über ein Getriebe und/oder ein Gestänge eine Kraft von dem Anhänger auf den zumindest einen Sensor zu übertragen, wenn sich der Knickwinkel des Gespanns verändert. Hierdurch ist keine elektronische Steuerung notwendig.

Um das Verfahren in einem Zugfahrzeug durchzuführen, stellt die Erfindung auch die besagte Steuervorrichtung für ein Zugfahrzeug bereit. Die Steuervorrichtung kann beispielsweise als ein Steuergerät für das Zugfahrzeug ausgestaltet sein. Die Steuervorrichtung ist dazu eingerichtet, eine Ausführungsform des erfindungsgemäßen Systems auf der Grundlage einer Ausführungsform des erfindungsgemäßen Verfahrens anzusteuern. Die Steuervorrichtung kann beispielsweise eine Totwinkelüberwachung und/oder eine Abbiegeunterstützung und/oder eine Spurhalteassistenz durchführen. Sie kann den Erfassungsbereich der besagten Sensoreinrichtung an einen aktuellen Knickwinkel eines Gespanns aus dem Zugfahrzeug und einem Anhänger anpassen. Hierdurch wird eine laterale Abdeckung der Umgebung des Gespanns durch den Erfassungsbereich der Sensoreinrichtung beispielsweise in Bezug auf eine Erfassungslücke und/oder eine Überschneidung mit dem Anhänger angepasst oder nachgeführt.

Die Erfindung stellt auch ein Zugfahrzeug mit zumindest einer Sensoreinrichtung des erfindungsgemäßen Systems für eine Überwachung eines Seitenbereichs eines Gespanns bereit. Das Gespann umfasst in der besagten Weise das Zugfahrzeug und zumindest einen Anhänger. Bei dem Zugfahrzeug ist zumindest eine Sensoreinrichtung jeweils über eine Ausführungsform der erfindungsgemäßen Haltevorrichtung des erfindungsgemäßen Systems an einem Fahrzeugteil des Zugfahrzeugs gehalten, also beispielsweise an einem Rahmen oder einem Verkleidungsteil des Zugfahrzeugs. Zudem ist eine Ausführungsform der erfindungsgemäßen Steuervorrichtung bereitgestellt, die mit der Haltevorrichtung gekoppelt ist. Hierdurch kann beispielsweise das besagte Steuersignal zum Ansteuern der Haltevorrichtung von der Steuervorrichtung zur Haltevorrichtung übertragen werden.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine schematische Darstellung einer Ausführungsform des erfindungsgemäßen Zugfahrzeugs mit einem Anhänger, wobei drei unterschiedliche Fahrsituation dargestellt sind;
- Fig. 2: eine schematische Darstellung einer Ausführungsform der erfindungsgemäßen Haltevorrichtung, wie sie in dem Zugfahrzeug von Fig. 1 bereitgestellt sein kann;
- Fig. 3: eine schematische Darstellung von Komponenten der Haltevorrichtung und einer Sensorvorrichtung;
- Fig. 4: ein Flussschaudiagramm zu einer Ausführungsform des erfindungsgemäßen Verfahrens, wie es durch eine Steuervorrichtung in dem Zugfahrzeug von Fig. 1 durchgeführt werden kann.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

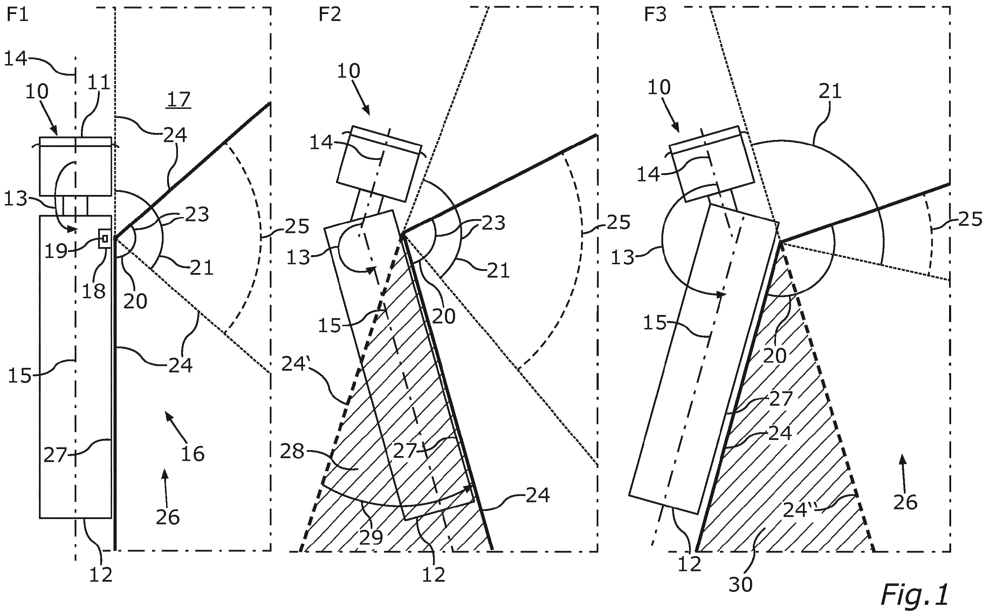

Fig. 1 zeigt ein Gespann 10 in drei unterschiedlichen Fahrsituationen F1, F2, F3. Das Gespann 10 kann beispielsweise ein Sattelschlepper sein. Das Gespann 10 kann ein Zugfahrzeug 11 und einen Anhänger 12 umfassen. Das Zugfahrzeug 11 und der Anhänger 12 können gegeneinander verdrehbar verbunden sein, beispielsweise mittels eines Sattels oder einer Deichsel. Entsprechend kann sich ein Knickwinkel 13 zwischen dem Zugfahrzeug 11 und dem Anhänger 12 ergeben. Beispielsweise kann der Knickwinkel 13 ein Winkel sein, der zwischen einer Längsachse 14 des Zugfahrzeugs 11 und einer Längsachse 15 des Anhängers 12 gebildet sein kann. In Fig. 1 weist der Knickwinkel 13 in den drei dargestellten Fahrsituationen F1, F2, F3 jeweils einen anderen Wert auf. Der Knickwinkel 13 kann beispielsweise stets gegen den Uhrzeigersinn oder stets im Uhrzeigersinn angegeben sein.

Bei dem Gespann 10 kann durch das Zugfahrzeug 11 eine Überwachung eines Seitenbereichs 16 einer Umgebung 17 vorgesehen sein. Der Seitenbereich 16 kann beispielsweise der rechte Bereich neben dem Gespann 10 sein, wie es in Fig. 1 dargestellt ist. Zusätzlich oder alternativ dazu kann eine Überwachung eines linken Seitenbereichs neben dem Gespann 10 (nicht dargestellt) vorgesehen sein. Die Überwachung des Seitenbereichs 16 kann mittels einer Sensoreinrichtung 18 vorgesehen sein, die zwei Radarsensoren als Sensoren 19 umfasst. In Fig. 1 ist dargestellt, dass zwei Sensoren 19 vorgesehen sein können, wobei ein erster Sensorerfassungsbereich 20 durch einen der Sensoren 19 und ein zweiter Sensorerfassungsbereich 21 durch einen zweiten der Sensoren 19 gebildet oder erzeugt sein kann. Die Sensorerfassungsbereiche 20, 21 sind hier durch einen Erfassungswinkel 23 und jeweilige Grenzen oder Ränder 24 der Sensorerfassungsbereiche 20, 21 veranschaulicht. Die Sensorerfassungsbereiche 20, 21 können eine Überlagerung 25 aufweisen. Die Sensorerfassungsbereiche 20, 21 ergeben gemeinsam einen Erfassungsbereich 26 der Sensoreinrichtung 18 insgesamt.

Mittels des Erfassungsbereichs 26 kann beispielsweise als Seitenbereich 16 in der Umgebung 17 ein Volumenbereich erfasst oder überwacht werden, der sich zumindest bei Geradeausfahrt (als Fahrsituation F1 dargestellt) an einem Rand 27 des Anhängers entlang erstrecken kann. Hierdurch kann ein neben dem Anhänger 12 befindlicher Verkehrsteilnehmer im Seitenbereich 16 mittels der Sensoreinrichtung 18 detektiert oder geortet werden. Beispielsweise kann vorgesehen sein, dass ein Rand 24 des Sensorerfassungsbereichs 20 parallel oder entlang eines Rands 27 des Anhängers 12 ausgerichtet ist.

In der Fahrsituation F2 kann das Gespann 10 eine Rechtskurve fahren. Entsprechend ergibt sich ein Knickwinkel 13, der von 0 Grad oder 180 Grad (Geradeausfahrt) abweicht. Würden nun die Sensoren 19 der Sensoreinrichtung 18 an dem Zugfahrzeug 11 ihre Stellung beibehalten, so würde sich der Abstrahlwinkel oder Erfassungswinkel 23 des Sensorerfassungsbereichs 20 mit dem Anhänger 12 überschneiden, was durch eine Grenze oder Rand 24' veranschaulicht ist. Es würde sich eine Überschneidung 28 ergeben. Hierdurch könnte der in der Überschneidung 28 liegende Teil des Anhängers 12 als ein fremder Verkehrsteilnehmer fehlinterpretiert werden und eine unnötige oder falsche Warnung an einen Fahrer des Zugfahrzeugs 11 ausgegeben werden.

Um dies zu verhindern, kann bei dem Gespann 10 in dem Zugfahrzeug 11 allerdings die Sensoreinrichtung 18 verschwenkt werden. Durch eine Bewegung oder Verschwenkung 29 der Schwenkposition zumindest eines Sensors 19 der Sensoreinrichtung 18 kann die Ausrichtung von dessen jeweiligem Sensorerfassungsbereich 20 relativ zum Gespann 10 verändert werden. So kann beispielsweise der Rand 24 des Sensorerfassungsbereichs 20 eines Sensors 19 bezüglich des Rands 27 des Anhängers 12 ausgerichtet werden. Hierdurch wird die Überschneidung 28 auf einen Überschneidungs-Maximalwert begrenzt oder reduziert.

In der Fahrsituation F3 kann das Gespann 10 eine Linkskurve fahren. Würde die Sensoreinrichtung 18 relativ zum Zugfahrzeug 11 eine unveränderte Ausrichtung des Erfassungsbereichs 26 aufweisen, so würde sich ein in Fig. 1 dargestellter gedachter Verlauf 24'' des Rands des Erfassungsbereichs 26 ergeben. Bei dem Gespann 10 kann vorgesehen sein, dass das Zugfahrzeug 11 zumindest einen Sensor 19 der Sensoreinrichtung 18 verschwenkt, sodass beispielsweise der Sensorerfassungsbereich 20 in seiner Ausrichtung an den Knickwinkel 13 angepasst ist. Beispielsweise kann der Rand 24 des Sensorerfassungsbereichs 20 an dem Rand 27 des Anhängers 12 ausgerichtet oder orientiert sein. Hierdurch wird eine Erfassungslücke 30, die sich zwischen dem Erfassungsbereich 26 und dem Anhänger 12 ergeben könnte, kleiner als ein vorbestimmter Lücken-Maximalwert gehalten.

Indem die Überlagerung 25 der Sensorerfassungsbereiche 20, 21 vorgesehen ist, kann trotz der Verschwenkung eines der Sensoren 19 sichergestellt sein, dass der Erfassungsbereich 26 zwischen den beiden Sensorerfassungsbereichen 20, 21 lückenlos bleibt, das heißt die Überlagerung 25 bleibt erhalten.

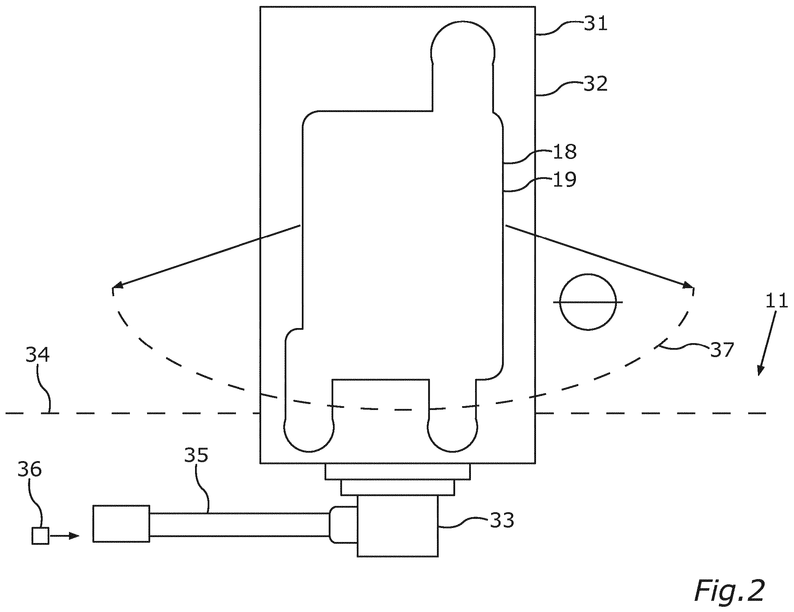

Fig. 2 veranschaulicht eine mögliche Ausgestaltung der Sensoreinrichtung 18 mit einer zugeordneten Haltevorrichtung 31. Fig. 2 veranschaulicht der Übersichtlichkeit halber nur einen Sensor 19 der Sensoreinrichtung 18. Der Sensor 19 kann an der Haltevorrichtung 31 befestigt sein, beispielsweise er mit ihr verschraubt sein. Die Haltevorrichtung 31 kann beispielsweise eine Halteplatte 32 zum Befestigen des Sensors 19 aufweisen. Die Haltevorrichtung 31 kann eine Antriebseinrichtung 33 aufweisen, durch welche der Sensor 19 beispielsweise zusammen mit der Halteplatte 32 relativ zu einem Fahrzeugteil 34 des Zugfahrzeugs 11 verschwenkt oder bewegt werden kann. Der Fahrzeugteil 34 kann beispielsweise durch einen Rahmen oder ein Verkleidungsteil des Zugfahrzeugs 11 realisiert sein. An diesem Fahrzeugteil 34 kann die Sensoreinrichtung 18 mittels der Haltevorrichtung 31 befestigt sein.

Es kann ein Anschlusskabel 35 vorgesehen sein, um die Antriebseinrichtung 33 mittels eines Steuersignals 36 zu steuern. Die Antriebseinrichtung 33 kann beispielsweise einen Elektromotor aufweisen, beispielsweise einen Schrittmotor. Mittels des Steuersignals 36 kann die Antriebseinrichtung 33 angesteuert werden, wodurch eine aktuelle Schwenkposition θ der Sensoreinrichtung 18 bezüglich des Fahrzeugteils 34 eingestellt oder verändert werden kann. Fig. 2 zeigt einen möglichen Bereich 37 von Werten für die Schwenkposition θ. Entsprechend der Schwenkposition θ ist dann auch der jeweilige Sensorerfassungsbereich 20 des Sensors 19 bezüglich des Fahrzeugteils 34 ausgerichtet oder verschwenkt. Somit kann ein Sensorerfassungsbereich 20 wie in Fig. 1 dargestellt relativ zum Gespann 10 ausgerichtet oder verschwenkt oder verstellt oder eingestellt werden.

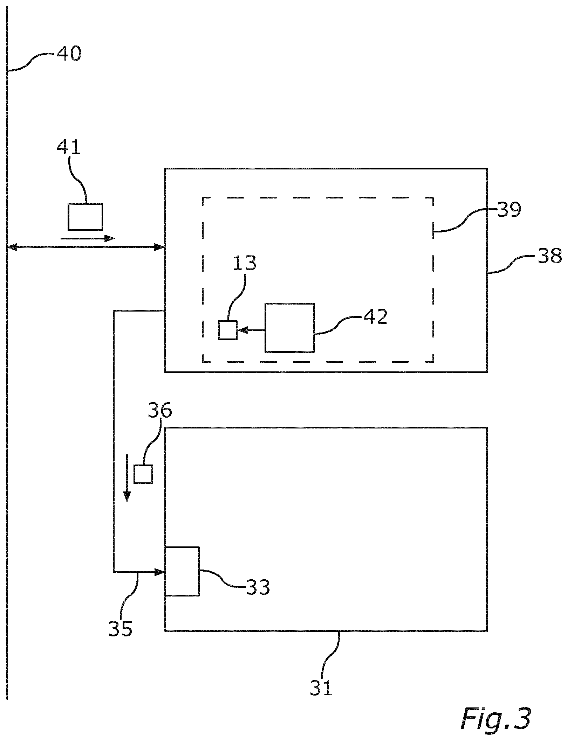

Fig. 3 veranschaulicht, wie ermittelt werden kann, welche aktuelle Schwenkposition θ aktuell für das Gespann 10 eingestellt werden soll.

Die Haltevorrichtung 31 kann hierzu einen Steuervorrichtung 38 aufweisen, die beispielsweise auf der Grundlage eines Steuergeräts realisiert sein kann. Die Steuervorrichtung 38 kann eine Prozessoreinrichtung 39 aufweisen, die zumindest einen Mikroprozessor und/oder zumindest einen Mikrocontroller aufweisen kann. Die Steuervorrichtung 38 kann beispielsweise aus einem Kommunikationsbus oder Datenbus 40 zumindest ein Betriebssignal 41 des Gespanns empfangen. Der Datenbus 40 kann beispielsweise ein CAN-Bus sein. Als Betriebssignal 41 kann beispielsweise ein aktueller Lenkwinkel und/oder eine aktuelle Fahrgeschwindigkeit zu einem jeweiligen Erfassungszeitpunkt empfangen werden. Das Betriebssignal kann wiederholt durch die Sensoreinrichtung 18 empfangen werden. Auf Grundlage eines digitalen Modells 42 kann durch die Steuervorrichtung 38 ein aktueller Wert des Knickwinkels 13 ermittelt werden. Daraufhin kann dann ermittelt werden, welche aktuelle Schwenkposition θ für den Sensor 19 der Sensoreinrichtung 18 bezüglich des Fahrzeugteils 34 notwendig ist. Beispielsweise können in der beschriebenen Weise eine Minimierung der Erfassungslücke 30 und/oder eine Minimierung der Überschneidung 28 vorgesehen sein. In Abhängigkeit von dem erfassten oder geschätzten Knickwinkel 13 kann dann zum Erfüllen der besagten zumindest einen Bedingung dann das Steuersignal 36 erzeugt werden, damit die Schwenkposition θ eingestellt werden kann.

Das Modell 42 kann beispielsweise vorsehen, unter Berücksichtigung eines Lenkwinkels und einer Fahrgeschwindigkeit oder Rollgeschwindigkeit des Gespanns 10 einen zeitlichen Verlauf oder eine zeitliche Entwicklung des Knickwinkels 13 zu ermitteln.

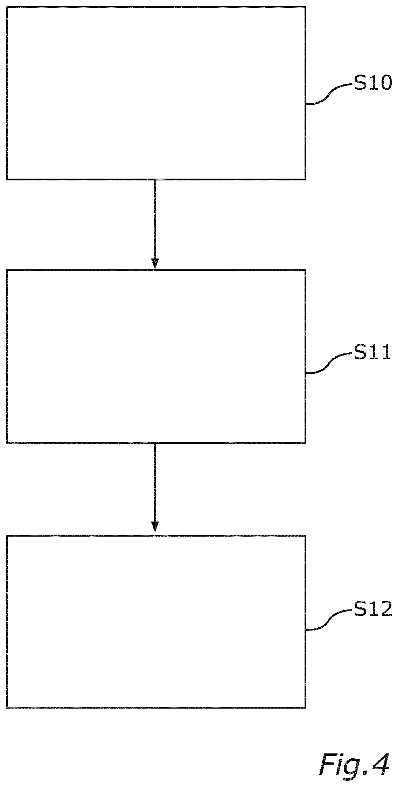

Fig. 4 veranschaulicht ein mögliches Verfahren, das durch die Steuervorrichtung 38, beispielsweise mittels der Prozessoreinrichtung 39, ausgeführt werden kann. In einem Schritt S10 kann die Steuervorrichtung das zumindest eine Betriebssignal 41 des Gespanns 10 empfangen. In einem Schritt S11 kann die Steuervorrichtung in Abhängigkeit von dem zumindest einen empfangenen Betriebssignal 41 einen aktuellen Knickwinkel 13 zwischen dem Zugfahrzeug 11 und dem Anhänger 12 ermitteln. In einem Schritt S12 kann die Steuervorrichtung 38 die mechanische Schwenkposition θ der Sensoreinrichtung 18 bezüglich des Fahrzeugteils 34 durch Ansteuern der Haltevorrichtung 31 einstellen, um eine Ausrichtung oder räumliche Orientierung des Erfassungsbereichs 26 an den Knickwinkel 13 anzupassen.

Insgesamt zeigt das Beispiel, wie durch die Erfindung eine adaptive elektro-mechanische Radar-Sensorhalterung bereitgestellt werden kann.

## Patentansprüche

1. Verfahren zum Überwachen einer Umgebung (17) eines Gespanns (10) aus einem Zugfahrzeug (11) und einem von dem Zugfahrzeug (11) gezogenen Anhänger (12), wobei an dem Zugfahrzeug (11) sowohl für einen rechten Seitenbereich (16) als auch für einen linken Seitenbereich (16) jeweils eine Sensoreinrichtung (18) zum Erfassen eines sich neben dem Gespann (10) erstreckenden Seitenbereichs (16) der Umgebung (17) bereitgestellt ist, wobei jede Sensoreinrichtung (18) jeweils zwei Radarsensoren (19) aufweist, wobei eine Summe der Sensorerfassungsbereiche (20, 21) jeweils einen Erfassungsbereich (26) der Sensoreinrichtung (18) bildet, und die Sensoreinrichtung (18) jeweils an einem Fahrzeugteil (34) des Zugfahrzeugs (11) mittels einer Haltevorrichtung (31) gehalten und der Erfassungsbereich (26) der jeweiligen Sensoreinrichtung (18) in den Seitenbereich (16) ausgerichtet ist, wobei ein Radarsensor (19) der zwei Radarsensoren (19) relativbeweglich zu dem Fahrzeugteil (34) mittels der Haltevorrichtung (31) bezüglich des Fahrzeugteils (34) verschwenkbar gelagert ist und eine Steuervorrichtung (38) zumindest ein Betriebssignal (41) des Gespanns (10) empfängt und in Abhängigkeit von dem zumindest einen empfangenen Betriebssignal (41) einen aktuellen Knickwinkel (13) zwischen dem Zugfahrzeug (11) und dem Anhänger (12) ermittelt und eine mechanische Schwenkposition (θ) des einen Radarsensors (19) der zwei Radarsensoren (19) bezüglich des Fahrzeugteils (34) durch Ansteuern der Haltevorrichtung (31) einstellt, um eine Ausrichtung des Erfassungsbereichs (26) an den Knickwinkel (13) anzupassen, **dadurch gekennzeich** - n e t , dass das Anpassen der mechanischen Schwenkposition (θ) erfolgt, indem lediglich ein Radarsensor (19) der jeweiligen Sensoreinrichtung (18) mechanisch verschwenkt oder verstellt oder neu ausgerichtet wird und die jeweiligen Sensorerfassungsbereiche (20, 21) der zwei Radarsensoren (19) zumindest eine teilweise Überlagerung (25) aufweisen, wobei die Überlagerung (25) der Sensorerfassungsbereiche (20, 21) so vorgesehen ist, dass trotz des Einstellens der mechanischen Schwenkposition (θ) des einen Radarsensors (19) der zwei Radarsensoren (19) bezüglich des Fahrzeugteils (34) sichergestellt ist, dass die Überlagerung (25) erhalten und somit der Erfassungsbereich (26) zwischen den beiden Sensorerfassungsbereichen (20, 21) lückenlos bleibt, und wobei durch das Ansteuern der Haltevorrichtung (31) bei einer Veränderung des Knickwinkels (13) die Schwenkposition (θ) dahingehend nachgeführt wird, dass eine Erfassungslücke (30) zwischen einem Rand (24) des Erfassungsbereichs (26) und dem Anhänger (12) kleiner als ein vorbestimmter Lücken-Maximalwert bleibt und dass eine Überschneidung (28) eines Erfassungswinkels (24') des Erfassungsbereichs (26) und dem Anhänger (12) kleiner als ein vorbestimmter Überschneidungs-Maximalwert bleibt, indem der Rand (24) des Sensorerfassungsbereichs (20) des einen Radarsensors bezüglich eines Rands (27) des Anhängers (12) ausgerichtet wird, wobei hierdurch eine Geister-Ortung vermieden wird.

2. Verfahren nach Anspruch 1, wobei das zumindest eine Betriebssignal (41) einen Lenkwinkel einer Lenkung des Zugfahrzeugs (11) umfasst.

3. Verfahren nach Anspruch 1 oder 2, wobei das zumindest eine Betriebssignal (41) einen jeweiligen Einschlagwinkel zumindest eines Rades des Zugfahrzeugs (11) und/oder des Anhängers (12) umfasst.

4. Verfahren nach einem der vorhergehenden Ansprüche, wobei die Steuervorrichtung (38) auf der Grundlage des zumindest einen Betriebssignals (41) mittels eines Modells (42) einen zeitlichen Verlauf des Knickwinkels (13) ermittelt.

5. Verfahren nach Anspruch 4, wobei das zumindest eine Betriebssignal (41) eine Fahrgeschwindigkeit des Gespanns (10) umfasst und das Modell (42) den zeitlichen Verlauf als Funktion der Fahrgeschwindigkeit ermittelt.

6. Zugfahrzeug (11) mit zwei Systemen umfassend jeweils eine Sensoreinrichtung (18) des Zugfahrzeugs (11) und eine Haltevorrichtung (31) für die Sensoreinrichtung (18) für eine Überwachung eines jeweiligen Seitenbereichs (16) eines Gespanns (10), wobei jede Sensoreinrichtung (18) jeweils zwei Radarsensoren (19) aufweist, wobei eine Summe der Sensorerfassungsbereiche (20, 21) einen jeweiligen Erfassungsbereich (26) der jeweiligen Sensoreinrichtung (18) bildet, wobei die Haltevorrichtung (31) dazu eingerichtet ist, die zumindest zwei Radarsensoren (19) der jeweiligen Sensoreinrichtung (18) an einem Fahrzeugteil (34) des Zugfahrzeugs (11) zu halten und einen von den zwei Radarsensoren (19) relativbeweglich zu dem Fahrzeugteil (34) zu halten und in Abhängigkeit von einem Steuersignal (36) jeweils eine Schwenkposition (θ) des einen Radarsensors (19) bezüglich des Fahrzeugteils (34) zu verändern, wobei die jeweiligen Sensorerfassungsbereiche (20, 21) der jeweiligen zwei Radarsensoren (19) zumindest eine teilweise Überlagerung (25) aufweisen, wobei die Überlagerung (25) der jeweiligen Sensorerfassungsbereiche (20, 21) so vorgesehen ist, dass trotz des Einstellens der mechanischen Schwenkposition (θ) des einen Radarsensors (19) der zwei Radarsensoren (19) bezüglich des Fahrzeugteils (34) sichergestellt ist, dass die Überlagerung (25) erhalten und somit der jeweilige Erfassungsbereich (26) zwischen den beiden jeweiligen Sensorerfassungsbereichen (20, 21) lückenlos bleibt,
**dadurch gekennzeichnet, dass**
die Sensoreinrichtung (18) des jeweiligen Systems jeweils durch die Haltevorrichtung (31) des jeweiligen Systems an dem Fahrzeugteil (34) des Zugfahrzeugs (11) gehalten ist und eine Steuervorrichtung (38) mit der jeweiligen Haltevorrichtung (31) des jeweiligen Systems gekoppelt ist, wobei die Steuervorrichtung (38) dazu eingerichtet ist, die Haltevorrichtungen (31) der Systeme gemäß einem Verfahren nach einem der Ansprüche 1 bis 5 anzusteuern.

7. Zugfahrzeug (11) nach Anspruch 6, wobei die Haltevorrichtung (31) zum Verändern der Schwenkposition (θ) eine elektromechanische Antriebseinrichtung (33) aufweist.

8. Zugfahrzeug (11) nach Anspruch 6 oder 7, wobei die Haltevorrichtung (31) zum Verändern der Schwenkposition (θ) eine pneumatische und/oder hydraulische Antriebseinrichtung (33) aufweist.

9. Zugfahrzeug (11) nach einem der Ansprüche 6 bis 8, wobei die Haltevorrichtung (31) zum Verändern der Schwenkposition (θ) eine mechanische Antriebseinrichtung (33) aufweist.

## Claims

1. Method for monitoring the surroundings (17) of a vehicle/trailer combination (10) consisting of a towing vehicle (11) and a trailer (12) towed by the towing vehicle (11), wherein a sensor device (18) for covering a lateral region (16) of the surroundings (17) that extends next to the vehicle/trailer combination (10) is provided on the towing vehicle (11) for each of both a right lateral region (16) and a left lateral region (16), each sensor device (18) having two respective radar sensors (19), wherein a sum of the sensor coverage regions (20, 21) forms a coverage region (26) of the sensor device (18) in each case, and the sensor device (18) is held on a respective vehicle part (34) of the towing vehicle (11) by means of a mounting device (31) and the coverage region (26) of the respective sensor device (18) is aligned with the lateral region (16), wherein one radar sensor (19) of the two radar sensors (19) is mounted pivotably with respect to the vehicle part (34) by means of the mounting device (31) so as to be mobile relative to the vehicle part (34), and a control device (38) receives at least one operating signal (41) of the vehicle/trailer combination (10) and takes the at least one received operating signal (41) as a basis for determining a current articulation angle (13) between the towing vehicle (11) and the trailer (12) and sets a mechanical swivel position (θ) of one radar sensor (19) of the two radar sensors (19) with respect to the vehicle part (34) by controlling the mounting device (31) in order to assimilate an alignment of the coverage region (26) to the articulation angle (13), **characterized in that** the mechanical swivel position (θ) is assimilated by virtue of just one radar sensor (19) of the respective sensor device (18) being mechanically pivoted or adjusted or realigned and the respective sensor coverage regions (20, 21) of the two radar sensors (19) have at least a partial overlap (25), wherein the overlap (25) between the sensor coverage regions (20, 21) is provided such that, despite the setting of the mechanical swivel position (θ) of one radar sensor (19) of the two radar sensors (19) with respect to the vehicle part (34), there is the certainty of the overlap (25) being maintained and thus the coverage region (26) between the two sensor coverage regions (20, 21) remaining uninterrupted, and wherein the control of the mounting device (31) in the event of a change in the articulation angle (13) updates the swivel position (θ) to the effect that a coverage gap (30) between an edge (24) of the coverage region (26) and the trailer (12) remains smaller than a predetermined maximum gap value and that an intersection (28) of a coverage angle (24') of the coverage region (26) and the trailer (12) remains smaller than a predetermined maximum intersection value by virtue of the edge (24) of the sensor coverage region (20) of one radar sensor being aligned with respect to an edge (27) of the trailer (12), thereby avoiding phantom tracking.

2. Method according to Claim 1, wherein the at least one operating signal (41) comprises a steering angle of a steering of the towing vehicle (11).

3. Method according to Claim 1 or 2, wherein the at least one operating signal (41) comprises a respective angle of lock of at least one wheel of the towing vehicle (11) and/or of the trailer (12).

4. Method according to one of the preceding claims, wherein the control device (38) takes the at least one operating signal (41) as a basis for determining a time characteristic of the articulation angle (13) by means of a model (42).

5. Method according to Claim 4, wherein the at least one operating signal (41) comprises a speed of travel of the vehicle/trailer combination (10) and the model (42) determines the time characteristic as a function of the speed of travel.

6. Towing vehicle (11) having two systems, each comprising a sensor device (18) of the towing vehicle (11) and a mounting device (31) for the sensor device (18) for monitoring a respective lateral region (16) of a vehicle/trailer combination (10), each sensor device (18) having two respective radar sensors (19), wherein a sum of the sensor coverage regions (20, 21) forms a respective coverage region (26) of the respective sensor device (18), wherein the mounting device (31) is designed to hold the at least two radar sensors (19) of the respective sensor device (18) on a vehicle part (34) of the towing vehicle (11) and to hold one of the two radar sensors (19) so as to be mobile relative to the vehicle part (34) and to take a control signal (36) as a basis for changing a respective swivel position (θ) of one radar sensor (19) with respect to the vehicle part (34), wherein the respective sensor coverage regions (20, 21) of the respective two radar sensors (19) have at least a partial overlap (25), wherein the overlap (25) between the respective sensor coverage regions (20, 21) is provided such that, despite the setting of the mechanical swivel position (θ) of one radar sensor (19) of the two radar sensors (19) with respect to the vehicle part (34), there is the certainty of the overlap (25) being maintained and thus the respective coverage region (26) between the two respective sensor coverage regions (20, 21) remaining uninterrupted,
**characterized in that**
the sensor device (18) of the respective system is held on the vehicle part (34) of the towing vehicle (11) by the mounting device (31) of the respective system in each case and a control device (38) is coupled to the respective mounting device (31) of the respective system, the control device (38) being designed to control the mounting devices (31) of the systems using a method according to one of Claims 1 to 5.

7. Towing vehicle (11) according to Claim 6, wherein the mounting device (31) has an electromechanical drive device (33) for changing the swivel position (θ).

8. Towing vehicle (11) according to Claim 6 or 7, wherein the mounting device (31) has a pneumatic and/or hydraulic drive device (33) for changing the swivel position (θ).

9. Towing vehicle (11) according to one of Claims 6 to 8, wherein the mounting device (31) has a mechanical drive device (33) for changing the swivel position (θ).

## Revendications

1. Procédé de surveillance de l'environnement (17) d'un ensemble routier (10) composé d'un véhicule tracteur (11) et d'une remorque (12) tractée par le véhicule tracteur (11), dans lequel, sur le véhicule tracteur (11), tant pour une zone latérale droite (16) que pour une zone latérale gauche (16), il est prévu un dispositif de détection (18) pour détecter une zone latérale (16) de l'environnement (17) s'étendant à côté de l'ensemble routier (10), chaque dispositif de détection (18) comprenant deux capteurs radar (19), la somme des zones de détection (20, 21) formant une zone de détection (26) du dispositif de détection (18), et le dispositif capteur (18) étant maintenu sur une partie respective de véhicule (34) du véhicule tracteur (11) au moyen d'un dispositif de maintien (31) et la zone de détection (26) du dispositif de détection respectif (18) étant orientée vers la zone latérale (16), un capteur radar (19) des deux capteurs radar (19) étant monté de manière pivotante par rapport à la partie de véhicule (34) au moyen du dispositif de maintien (31) par rapport à la partie de véhicule (34), et un dispositif de commande (38) recevant au moins un signal de fonctionnement (41) de l'ensemble routier (10) et déterminant, en fonction dudit au moins un signal de fonctionnement (41) reçu, un angle d'inclinaison actuel (13) entre le véhicule tracteur (11) et la remorque (12), et réglant une position de pivotement mécanique (θ) d'un capteur radar (19) des deux capteurs radar (19) par rapport à la partie du véhicule (34) en actionnant le dispositif de maintien (31), pour adapter l'orientation de la zone de détection (26) à l'angle d'inclinaison (13), **caractérisé en ce que** l'adaptation de la position de pivotement mécanique (θ) s'effectue en pivotant ou en déplaçant mécaniquement ou en réorientant uniquement un capteur radar (19) du dispositif de détection respectif (18), et les zones de détection respectives (20, 21) des deux capteurs radar (19) comprennent au moins un recouvrement partiel (25), le recouvrement (25) des zones de détection (20, 21) étant prévu de telle sorte que, malgré le réglage de la position de pivotement mécanique (θ) dudit un capteur radar (19) parmi les deux capteurs radar (19) par rapport à la partie du véhicule (34), le chevauchement (25) soit maintenu et que la zone de détection (26) entre les deux zones de détection (20, 21) reste ainsi sans interruption, et dans lequel, par la commande du dispositif de maintien (31) lors d'une modification de l'angle d'inclinaison (13), permet de régler la position de pivotement (θ) de telle sorte qu'un intervalle de détection (30) entre un bord (24) de la zone de détection (26) et la remorque (12) reste inférieur à une valeur maximale d'intervalle prédéfinie et qu'un chevauchement (28) d'un angle de détection (24') de la zone de détection (26) et de la remorque (12) reste inférieur à une valeur maximale de chevauchement prédéfinie en alignant le bord (24) de la zone de détection (20) du capteur radar par rapport à un bord (27) de la remorque (12), ce qui permet d'éviter une détection fantôme.

2. Procédé selon la revendication 1, dans lequel ledit au moins un signal de fonctionnement (41) comprend un angle de braquage d'une direction du véhicule tracteur (11).

3. Procédé selon la revendication 1 ou la revendication 2, dans lequel ledit au moins un signal de fonctionnement (41) comprend un angle de braquage respectif d'au moins une roue du véhicule tracteur (11) et/ou de la remorque (12).

4. Procédé selon l'une des revendications précédentes, dans lequel le dispositif de commande (38) détermine, sur la base dudit au moins un signal de fonctionnement (41), au moyen d'un modèle (42), une évolution dans le temps de l'angle d'inclinaison (13).

5. Procédé selon la revendication 4, dans lequel ledit au moins un signal de fonctionnement (41) comprend une vitesse de déplacement de l'ensemble routier (10) et le modèle (42) détermine l'évolution dans le temps en fonction de la vitesse de déplacement.

6. Véhicule tracteur (11) équipé de deux systèmes comprenant chacun un dispositif de détection (18) du véhicule tracteur (11) et un dispositif de maintien (31) pour le dispositif de détection (18) afin de surveiller une zone latérale respective (16) d'un ensemble routier (10), chaque dispositif de détection (18) comprenant deux capteurs radar (19), une somme des zones de détection (20, 21) formant une zone de détection respective (26) du dispositif de détection respectif (18), le dispositif de maintien (31) étant conçu pour maintenir lesdits au moins deux capteurs radar (19) du dispositif de détection respectif (18) sur une partie de véhicule (34) du véhicule tracteur (11) et à maintenir l'un desdits deux capteurs radar (19) mobile par rapport à ladite partie de véhicule (34) et, en fonction d'un signal de commande (36), à modifier respectivement une position de pivotement (θ) dudit capteur radar (19) par rapport à la partie de véhicule (34), les zones de détection respectives (20, 21) des deux capteurs radar respectifs (19) comprenant au moins un chevauchement partiel (25), le chevauchement (25) des zones de détection respectives (20, 21) étant prévu de telle sorte que, malgré le réglage de la position de pivotement mécanique (θ) dudit un capteur radar (19) parmi les deux capteurs radar (19) par rapport à la partie de véhicule (34), le recouvrement (25) soit maintenu et que la zone de détection respective (26) entre les deux zones de détection respectives (20, 21) reste ainsi sans interruption,
**caractérisé en ce que**
le dispositif de détection (18) du système respectif est maintenu par le dispositif de maintien (31) du système respectif sur la partie de véhicule (34) du véhicule tracteur (11), et un dispositif de commande (38) est relié au dispositif de maintien (31) du système respectif, le dispositif de commande (38) étant agencé pour commander les dispositifs de maintien (31) des systèmes selon un procédé selon l'une des revendications 1 à 5.

7. Véhicule tracteur (11) selon la revendication 6, dans lequel le dispositif de maintien (31) comprenant un dispositif d'entraînement électromécanique (33) pour modifier la position de pivotement (θ).

8. Véhicule tracteur (11) selon la revendication 6 ou la revendication 7, dans lequel le dispositif de maintien (31) comprend un dispositif d'entraînement pneumatique et/ou hydraulique (33) pour modifier la position de pivotement (θ).

9. Véhicule tracteur (11) selon l'une des revendications 6 à 8, dans lequel le dispositif de maintien (31) destiné à modifier la position de pivotement (θ) comprend un dispositif d'entraînement mécanique (33).
